# EUROPEAN PATENT APPLICATION

(11) **EP 0 574 845 A2**
(43) Date of publication of application: **22.12.1993**
(21) Application number: 93109389.2
(22) Date of filing: 11.06.1993
(51) Int. Cl.: G11B 27/36, G11B 15/68, G11B 27/00

(54) **Automated storage and retrieval library**

(30) Priority: 15.06.1992 US 898273
(71) Applicant: International Business Machines Corporation, Armonk, N.Y. 10504 (US)
(72) Inventor: Adams, George Frederick, Tucson, Arizona 85741 (US); Allen, Vincent Kanard, Tucson, Arizona 85704 (US); East, Don Gaylord, Tucson, Arizona 85745 (US)
(74) Representative: Burt, Roger James, Dr.

(57) **Abstract**

A data processing system includes an automated storage library (14) having a storage cell (16), a media transport and retrieval mechanism (20), and a peripheral drive device (18). The storage cell (16) holds magnetic tape cartridges in storage for retrieval by a picker (32) mounted on the transport and retrieval mechanism (20). The transport and retrieval mechanism (20) includes a cartridge drive (36) and controls to perform conditioning procedures on the tape media prior to placing the cartridge into the drive device (18) for the transfer of information to/from the tape. The conditioning procedures can be a gross positioning of the tape to the information, a refresh procedure to check for tape tension, and/or a tape length procedure.

## Description

This invention relates generally to the storage and retrieval of data storing cartridges and more particularly to the transport of the cartridges from storage to an accessing device.

Automatic information storage and retrieval libraries have been constructed and operated using a tape cartridge to store the information. Physical retrieval of the tape cartridge containing the information is a specialized form of automatic warehousing. The main object has been to facilitate the movement of the item, the cartridge, among the storage compartments, the handling unit, and the processing stations. The handling unit transports or exchanges the cartridge from the storage compartments to the processing stations and back to the storage compartments. The handling unit has generally received the most attention because the handling unit occupies the most unproductive time in the retrieval of the information. Multiple processing stations have been the major answer and have greatly improved the lag time between the request and the actual access to the information. Although many improvements have been adapted, there is forevermore the need to improve the access time.

It is, therefore, an object of the present invention to provide an automated cartridge information retrieval storage system having improved access time.

The present invention is set for use with a data processing system that includes an automated media storage library with a storage area for a cartridge containing information stored on a media, a transport retrieval unit, and a drive device for reading and writing data to the cartridge for use by the data processing system. The automated storage library generally includes a control unit to accept the information request. The control unit in turn finds the cartridge containing the information in a storage cell of the storage area and activates a cartridge pickup mechanism of the media transport retrieval mechanism to pick up the cartridge for delivery to a designated peripheral drive device. The media transport retrieval mechanism includes a picker to fetch the desired cartridge, and deliver and insert it into the designated cartridge drive unit of the peripheral drive device.

In the present invention, the retrieval mechanism includes a picker, a cartridge drive unit which interfaces with the cartridge, and a media sensor to take care of preliminary procedures which may be required before the information can be retrieved from the cartridge. One preliminary procedure can be a gross positioning of the media to the location of the information on which the central processor needs to work. The preliminary procedures may also include a refresh process to insure proper media conditioning and a determination of the amount of media in the cartridge, for instance. The picker takes the cartridge from the storage. The cartridge drive unit on the retrieval mechanism processes the cartridge as the retrieval mechanism advances the cartridge to the selected peripheral drive device. Conversely, the drive unit in the retrieval mechanism restores the cartridge to its storage condition after information processing. The picker retrieves the cartridge from the peripheral drive device in whatever condition it is placed after the information processing. The drive unit and the media sensor in the media transport and retrieval mechanism process the cartridge media to rewind the media in the cartridge, for instance, to restore the cartridge into condition for storage. The picker then returns the cartridge into its storage cell.

This invention makes active use of the normally dormant time required for the picker to move the data cartridge between its shelf location in the storage cells and the drive device for information processing. The active use is performed in parallel with the fetch and return operations. There is an improved use of the cartridge transport time with this invention, thereby improving overall data information access time. Mechanical reliability and lifetime of the peripheral drive device are increased. Non-data operations are off-loaded to the transport mechanism for increased information throughput.

The invention is preferable for use with a magnetic media and, in particular, for use with a magnetic tape media stored in a two-spool casing such as a cartridge or cassette. It should be evident that many other types of media and cartridges are adaptable for use with the present invention. The present invention is equally adapted to other types of subsystems by anyone skilled in the art as taught within the following description.

In view of the foregoing, the principal object of this invention as claimed is to provide an enhanced automated library system.

Another object of this invention is to provide an enhanced automated tape cartridge retrieval apparatus.

Yet another object of this invention is to provide retrieval apparatus for an automated library system which can provide an increase in efficiency in information retrieval from library storage systems.

Still another object is to provide a retrieval apparatus that handles pre information transfer steps while the retrieval apparatus is transporting the cartridge to its information transfer processing station.

The various novel features of this invention, along with the foregoing and other objects, as well as the invention itself, both as to its organization and method of operation, may be more fully understood from the following description of illustrated embodiments when read in conjunction with the accompanying drawing wherein:
Fig. 1 is a schematic block diagram of a data processing system including an automated library storage system according to the present invention; and
Fig. 2A, 2B and 2C are flow diagrams of a cartridge retrieval procedure and the improvement according to the present invention using the automated storage system of Fig. 1.

Additional description of apparatus useful with the present invention may be found in the following references, each of which is hereby incorporated by reference: U.S. Patents 3,831,197, 3,834,559 and 3,854,604 disclose various aspects of article handling storage and retrieval apparatus; U.S.Patents 4,015,799 and 4,125,881 disclose various aspects of the tape motion control for a reel-to-reel tape system; U.S. Patent 4,541,027 discloses a method of sizing the amount of tape on a reel useful with the invention; U.S. Patent 4,389,600 discloses a method for testing the interlayer tension of the tape media of a cartridge; and IBM Technical Disclosure Bulletin articles Vol. 32, No. 4A September 1989, at pages 13-5 and Vol. 27, No. 1B, June 1984, at pages 473-4 for cartridge handling devices useful with this invention.

In general, the present invention can be used with any processing system that uses an automated media storage library with a transport retrieval unit. The automated storage library generally includes a control unit to accept the information request. The control unit in turn finds the cartridge containing the information in a storage cell in the library. Then the control unit activates a cartridge pickup mechanism of a media transport retrieval mechanism to pick up the cartridge for delivery to a designated peripheral drive device. The media transport retrieval mechanism includes a picker to fetch the desired cartridge and deliver and insert it into the designated cartridge drive unit of the peripheral drive device.

In the present invention, the retrieval mechanism also includes a cartridge drive unit and a media sensor. The cartridge drive unit interfaces with the cartridge. The media sensor reviews any preliminary procedures which may be required before the information can be retrieved from the cartridge. One preliminary procedure can be a gross positioning of the media to the location of the information on which the central processor needs to work. The preliminary procedures may also include a refresh process to insure a proper media conditioning and/or a determination of the amount of media in the cartridge, for instance. The cartridge drive unit on the retrieval mechanism processes the cartridge as the retrieval mechanism advances the cartridge to the selected peripheral drive device. Conversely, the drive unit in the retrieval mechanism restores the cartridge to its storage condition after information processing. The picker retrieves the cartridge from the peripheral drive device immediately after the information processing. The drive unit and the media sensor in the media transport and retrieval mechanism processes the cartridge media to rewind the media in the cartridge, for instance, to restore the cartridge to the required condition for storage. The picker then places the cartridge into its storage cell.

Referring now more particularly to the drawing, like numerals denote like features and structural elements in the various figures. The invention will be described embodied cartridge magnetic tape systems for use in data processing environments. In the preferred embodiment, the tape cartridges discussed are dual reel cartridges having a length of tape magnetic media wound on at least one reel and having its free end connected to the second reel.

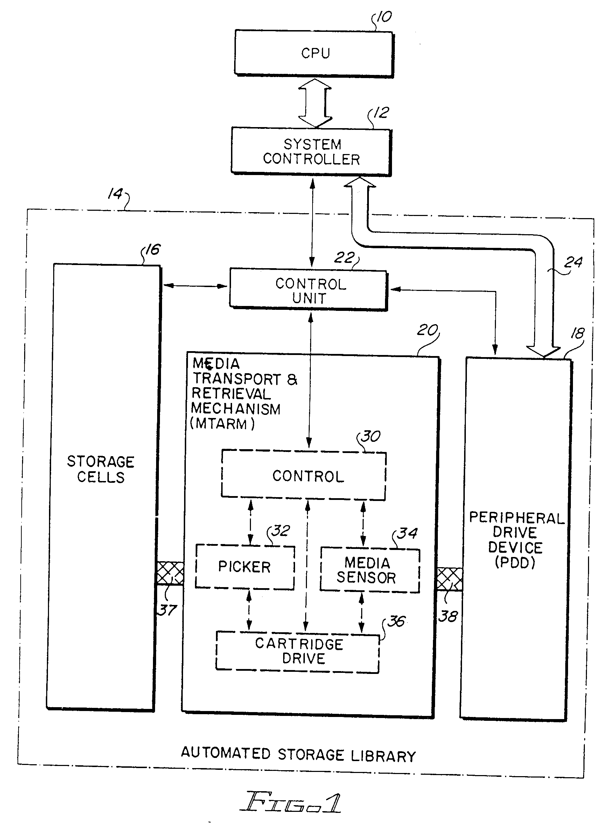

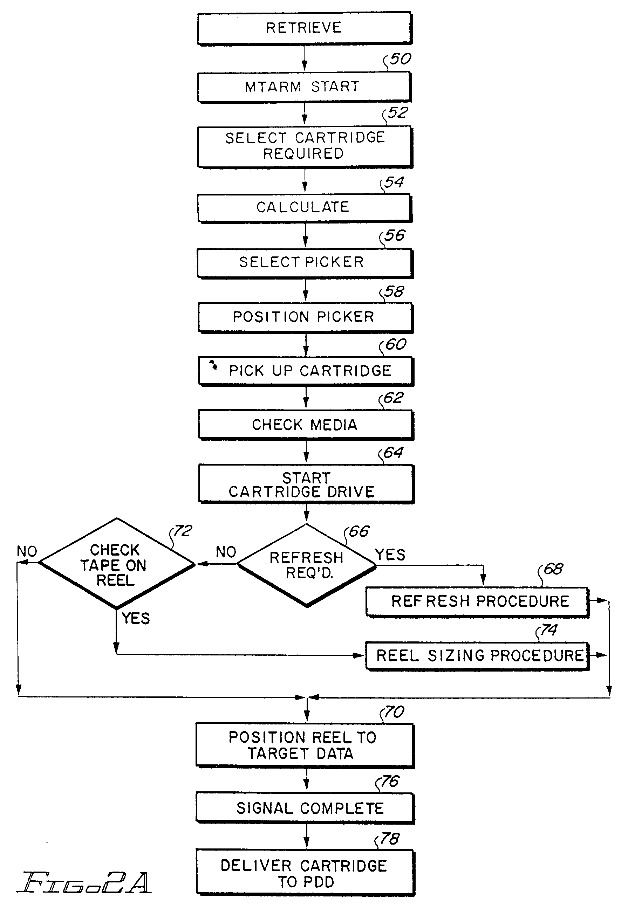

Referring to FIG 1, a data processing system is controlled by at least one host central processing unit (CPU) 10 to store, retrieve and manipulate data for use in the data processing environments. The data processing system includes at least one system controller 12 and at least one automated storage library 14. The system controller 12 accepts the commands and data from the CPU 10 and controls itself and the automated storage library 14 as well as other storage devices (not shown).

The automated storage library 14 generally includes a series of storage cells 16 to store a plurality of cartridges, at least one Peripheral drive device (PDD) 18, a media transport and retrieval mechanism (MTARM) 20, and a control unit 22. The control unit 22 accepts the request for information processing from the system controller 12. The control unit 22 then locates the cartridge in the storage cells 16 that contains the information required. The control unit 22 activates the MTARM 20 to retrieve that cartridge from the storage cells 16. The MTARM then transports the cartridge to the PDD 18 to locate and process the data information stored on the media located in the cartridge. The PDD 18 includes a recorder-reproducer means for at least retrieving data from the media in the cartridges. The recorder-reproducer means can include a transducer of the type well known to read and/or write magnetic transitions onto media such as magnetic tape. The PDD 18 communicates with the system controller on a data line 24 to send and receive data as required by the CPU 10.

The MTARM 20 includes a control box 30 to process the commands from the control unit 22, a picker 32, a media sensor 34 and a cartridge drive 36. The picker 32 operates to retrieve the cartridge from the storage cells 16, to hold the cartridge during transport along a symbolic path 37 and 38, and to hand the cartridge over to the PDD 18 for processing. The cartridge drive 36 is part of the picker 32 in that the cartridge retrieved by the picker 32 is placed into the cartridge drive 36 to control the rotation of the reels of the tape cartridge. The media sensor 34 is attached to the cartridge drive 36. The media sensor 34 senses the various aspects of the tape media to determine what need to be completed to prepare the cartridge and the media for immediate operation in the PDD 18.

Prepositioning the media to the approximate location of the information is one aspect of the media that can be completed before positioning of the cartridge in the PDD 18. The prepositioning of the tape media approximate to the location of the requested data information is one procedure that can be performed by the MTARM 20 that will save time. The PDD 18 can immediately hone in on the information. Gross positioning is realized in the MTARM 20. Then the PDD 18 can quickly locate the data without major reeling and unreeling. This is especially important with a serially stored data cartridge such as a tape cartridge. The cartridge drive 36 receives the location information from the control unit 22 via the control box 30. The cartridge reels are rotated until the media sensor 34 senses that the tape is approximately at that location. The media sensor 34 for this procedure could be a tachometer and counter that counts the revolutions of the cartridge reels. The information received from the control unit 22 is the number of revolutions that the reels must rotate until the known position of the information is reached. Other types of media sensors could be substituted such as a 'length of tape sensor'. In that case, the tape rotates a wheel that gives a reading of the length of the tape unwound from the reel.

Information that might be important to be known before the entry of the cartridge into the PDD 18 is the amount of tape wound on one hub or the length of the tape held within the cartridge. In that instance, the procedure of the aforementioned USP 4,541,027 can be followed by the cartridge drive 36 and media sensor 34. In that Patent a certain rotational torque is applied by the cartridge drive to a reel. The torque imparts a rotational displacement over a fixed period of time. The rotational displacement is measured by a tachometer. The inertia of the angular acceleration of different reels may result in different rotational displacements over the set period of time which can then be used to indicate the amount of tape on the rotated reel. Then the reels can be rotated for prepositioning as previously discussed.

A refresh procedure as described in the aforementioned USP 4,389,600 can also be performed by the MTARM 20 while the picker 32 is transporting the cartridge to the PDD 18. Reels of magnetic tape used in a reel-to-reel drive system suffer from an inter-layer slippage if the media has undergone environmental changes. This slippage will cause errors to occur in the reading of the tape by the PDD 18. A constant tension and velocity and an accurate location position of the media is required in the reel-to-reel drive, see the aforementioned USP 4,125,881. To check whether the tension of the tape needs to be refreshed, one end of the tape is firmly held. The reel having tape wound around its hub is driven in a reverse direction against the firmly held end of the tape. A detected reverse direction by a tachometer, for instance, indicates an inter-layer slip condition. The tape tension must be refreshed by unwinding the tape from the full reel to the empty reel and then rereeling with the correct tension applied. This procedure is performed by the cartridge drive 36 under control of the media sensor 34 before the cartridge drive 36 performs the procedure to locate the gross positioning of the information on the tape as discussed previously.

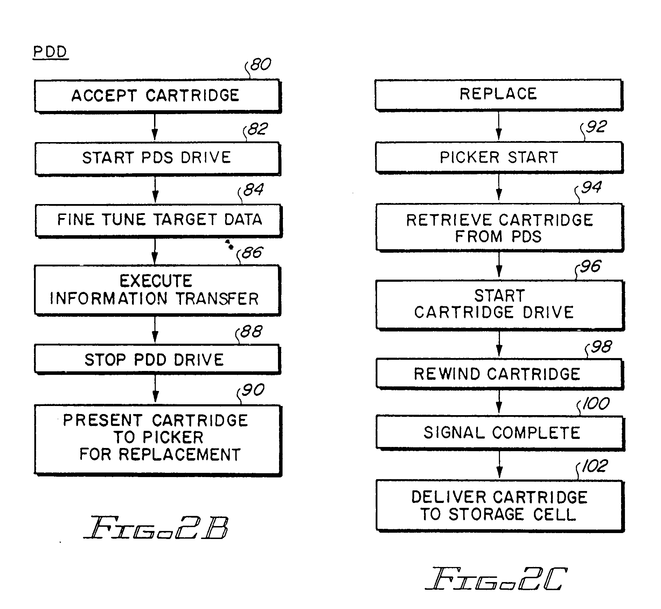

All procedures required to prepare the cartridge for delivery to the PDD 18 for sensing of the data information is performed by the MTARM 20. Having the MTARM performed these procedures decreases the access time of the data processing system to the information stored in the automated storage library. Idle time of the PDD 18 between accessing data assignments is avoided. The cartridge is prepared for quick access to the stored information before transfer to the PDD 18 and returned to storage conditions by the MTARM 20 after the information access by the PDD 18. The cartridge itself can be equipped with a reel brake to prevent unraveling of the tape during the transfer operation when the cartridge and its reels are not being held by the drive interfaces. Examples of reel brakes usable with the cartridge and operable with the present invention are shown in the IBM Technical Disclosure Bulletin articles entitled "Tape Cartridge Reel Brake" October 1983, at pages 2536-2538, and "Tape Cassette"_{,} January 1972, at pages 2339-2340. The steps performed by the MTARM 20 in retrieving a cartridge and delivering the cartridge to the PDD 18 is shown in Fig. 2A. The apparatus of Fig.1 will be used to assist in the explanation of the process according to the present invention as shown in Figs. 2A, 2B and 2C.

Referring now to Fig. 2A, the first step on a retrieve cycle is to start the MTARM 20 operation as shown in block 50. The next step in block 52 is to select the cartridge required as determined by the information requested by the CPU 10 and transmitted to the control unit 22 via the system controller 12. Then the coordinates of the storage location of the cartridge are calculated as shown in block 54 together with the coordinates of the location of an available PDD 18 that will further handle the media for the requested information. The time required to pickup and deliver the cartridge to the PDD 18 is also calculated. The picker 32 is selected as shown in block 56 from the plurality of pickers normally used in the automated storage library. Generally the picker selected will be the one that is the closest or will take the least amount of time to complete the retrieval of the requested information. The next step as shown in block 58 is that the picker 32 is positioned adjacent to the cartridge located in the storage cell 16, and then the cartridge is grasped by the picker as shown in block 60. The MTARM 20 next moves to the destination of the selected PDD 18. Simultaneously, the check media procedure is started as shown in block 62 and the cartridge drive 36 is started as shown in block 64. A test is performed on the cartridge to see if a refresh procedure is required as shown in a decision block 66. If a refresh procedure is required, the procedure is performed as shown in block 68 and the next step may be to position the reel to the target data as shown in block 70. If the procedure to check the amount of tape on a reel is desired, now is the time that this procedure can be performed as shown in a decision block 72 and block 74. After the cartridge reels are positioned, a complete signal is generated as shown in block 76 and the cartridge is ready for delivery to the PDD 18 as is shown in block 78. The process now to be performed in the PDD 18 is shown in Fig. 2B.

In Fig. 2B, the first step of block 80 is the acceptance of the cartridge by the drive of the PDD 18. The drive of the PDD 18 is started as shown in block 82 and the media is precisely positioned to fine tune to the target data as shown in block 84. The information transfer is executed as shown in block 86 whereby the data is transferred on data line 24 in communication with the system controller 12. The next step is to stop the drive of the PDD 18 as shown in block 88 and to present the cartridge to the picker 32 of the MTARM 20 for replacement into the storage cell 16 as is shown in block 90. The replace procedure is then started as shown in Fig. 2C.

Referring now to Fig. 2C, the replace procedure starts by activating the picker 32 of the MTARM 20, as shown in block 92, to retrieve the cartridge from the PDD 18, as is shown in block 94. The cartridge drive 36 is started as shown in block 96 to rewind the cartridge to its storage position as shown in block 98. A complete signal is generated when the cartridge is ready for storage as shown in block 100. The cartridge is then delivered to the storage cell 16 by the picker 32 when the MTARM 20 has returned to a position adjacent to the storage cell 16, as shown in block 102. The MTARM 20 is then ready for its next assignment to retrieve a cartridge from the storage cell 16 containing information as required by the CPU 10.

The documents incorporated by reference show a description of reel-to-reel tape drives and control of the drives as well as storage stations and retrieval units. While the invention has been described herein with respect to a preferred embodiment thereof, it will be understood by those skilled in the art that various changes in detail may be made therein without departing from the spirit, scope, and teaching of the invention. For example, the invention has been described for use in a magnetic tape cartridge system, but could be embodied in any applicable peripheral storage system employing sequentially recorded storage media generally stored in a cartridge. Several Procedures such as a refresh procedure are noted but it should be evident that this invention should not be so limited. Other characteristics of the storage media may be prepared in the transport mechanism. Also, only one media transport and retrieval mechanism is shown. It is evident that generally an automated storage library includes a plurality of storage cells, retrieval mechanisms, and peripheral drive devices.

## Claims

1. An automated storage library (14) comprising:
a plurality of storage cells (16) each capable of storing a medium containing data therein;
at least one peripheral drive device (18), each including a reproducer means for retrieving data from the medium; and
a transport mechanism (20) having automated means for transferring the medium between one of said plurality of storage cells (16) and said at least one peripheral drive device (18), characterised in that said transport mechanism (20) includes means (34) for examining condition information about the medium during the transfer of the medium between one of said plurality of storage cells (16) and said at least one peripheral drive device (18) and responsive thereto for acting on the medium according to said condition information.

2. An automated storage library (14) as defined in Claim 1 wherein said condition information is obtained by a check of the inter-layer slip state of the medium and said transport mechanism (20) performs a refresh procedure in response to said check.

3. An automated storage library (14) as defined in Claim 1 wherein said medium condition information is a gross positioning operation signal and said transport mechanism (20) is responsive thereto to position the medium such that said reproducer means of said at least one peripheral drive device (18) can retrieve the data from the medium with only fine positioning by said at least one peripheral drive device (18).

4. An automated storage library (14) as defined in Claim 1 wherein the medium is a length of magnetic tape wound on a reel.

5. An automated storage library (14) as defined in Claim 4 wherein said medium condition information is obtained by a check of the amount of tape wound around said reel and said transport mechanism (20) performs a rotational torque to said reel and is responsive thereto to generate a signal determinative of the amount of tape.

6. An automated storage library (14) as defined in Claim 1 wherein the medium is a length of magnetic tape wound on two reels positioned in a cartridge.

7. An automated storage library (14) as defined in Claim 6 wherein said medium condition information is a gross positioning operation signal and said transport mechanism (20) is responsive thereto to rotate the reels holding the length of magnetic tape and thereby position the medium such that the reproducer means of said at least one peripheral drive device (18) can retrieve the data from said medium with only fine positioning by said at least one peripheral drive device (18).

8. An automated storage library (14) comprising:
a plurality of storage cells (16) each capable of storing a medium containing data therein; and
a transport mechanism (20) having automated means for transporting a medium to or from one of said plurality of storage cells (16), said transport mechanism (20) including means (34) for examining condition information about the medium during the transport of the medium to or from one of said plurality of storage cells (16) and responsive thereto for acting on the medium according to said condition information.

9. An automated storage library (14) as defined in Claim 8 wherein said condition information is obtained by a check of the inter-layer slip state of the medium and said transport mechanism (20) performs a refresh procedure in response to said check.

10. An automated storage library (14) as defined in Claim 8 wherein said medium condition information is a gross positioning operation signal and said transport mechanism (20) is responsive thereto to position said medium.

11. An automated storage library (14) as defined in Claim 8 wherein said medium is a length of magnetic tape wound on a reel.

12. An automated storage library (14) as defined in Claim 11 wherein said medium condition information is obtained by a check of the amount of tape wound around said reel and said transport mechanism (20) performs a rotational torque to said reel and is responsive thereto to generate a signal determinative of the amount of tape.

13. An automated storage library (14) as defined in Claim 8 wherein said medium is a length of magnetic tape wound on two reels positioned in a cartridge.

14. An automated storage library (14) as defined in Claim 13 wherein said medium condition information is a gross positioning operation signal and said transport mechanism (20) is responsive thereto to rotate the reels holding the length of magnetic tape and thereby position the medium.

15. A data processing system capable of retrieving data, said data processing system comprising:
at least one host processor (10);
at least one control unit (22) connected to receive commands from said at least one host processor (10) and to transmit data to said at least one host processor (10);
an automated storage library subsystem (14) connected to said at least one control unit (22), said automated storage library subsystem (14) being as defined in any claim from 1 to 7.

16. A method for transferring data to/from an automated storage library (14), said automated storage library (14) including a plurality of storage cells (16) each capable of storing a medium containing data therein and a peripheral drive device (18), the method comprising the machine-executed steps of:
retrieving a medium from one of said plurality of storage cells (16);
transferring the medium to said peripheral drive device (18);
during said transferring, examining condition information about the medium and acting on the medium according to said condition information;
inserting the medium into said peripheral drive device (18); and
transferring data to/from the medium.

17. A method as defined in claim 16 wherein examining said condition information is a check of the inter-layer slip state of the medium and the method further comprises performing a refresh procedure in response to said check.

18. A method as defined in Claim 16 wherein examining said condition information is a gross positioning operation signal and the method further comprises, in response thereto, positioning the medium such that said peripheral drive device (18) can transfer the data to/from the medium with only fine positioning by said peripheral drive device (18).

19. A method as defined in Claim 16 wherein the medium is a length of magnetic tape wound on a reel.

20. A method as defined in Claim 19 wherein examining said condition information is a check of the amount of tape wound around said reel and the method further comprises performing a rotational torque to said reel and generating a signal determinative of the amount of tape in response thereto.

21. A method as defined in Claim 16 wherein the medium is a length of magnetic tape wound on two reels positioned in a cartridge.

22. A method as defined in Claim 21 wherein examining said condition information is a gross positioning operation signal and the method further comprises, in response thereto, rotating the reels holding the length of magnetic tape to position the medium such that said peripheral drive device (18) can transfer the data to/from the medium with only fine positioning by said peripheral drive device (18).
